# FASCICULE DE BREVET EUROPEEN

(11) **EP 2 027 005 B1**
(45) Date de publication et mention de la délivrance du brevet: **15.09.2010**
(21) Numéro de dépôt: 07788944.2
(22) Date de dépôt: 12.04.2007
(51) Int. Cl.: B62D 7/14

(54) **DISPOSITIF D'ORIENTATION DE ROUES ARRIERE**
VORRICHTUNG ZUR AUSRICHTUNG VON HINTERRÄDERN
DEVICE FOR ORIENTATING REAR WHEELS

(30) Priorité: 14.06.2006 FR 0605298
(43) Date de publication de la demande: 25.02.2009
(73) Titulaire: Renault S.A.S., 92100 Boulogne-Billancourt (FR)
(72) Inventeur: CHASSAGNOL, Cédric, F-92300 Levallois-Perret (FR); GUEGAN, Stéphane, F-78000 Versailles (FR)
(86) Numéro de dépôt international: PCT/FR2007/051108
(87) Numéro de publication internationale: WO 2007/144524

(56) Documents cités:
- JP-A- 63 151 578

## Description

L'invention concerne les véhicules présentant des roues directrices sur plusieurs essieux, et en particulier les dispositifs d'orientation des roues arrière.

Les dispositifs d'orientation des roues arrière comprennent en général un actionneur hydraulique ou électrique. De tels actionneurs présentent un organe d'actionnement dont les déplacements modifient l'angle d'orientation des roues arrière autour de la verticale du véhicule. La graisse de lubrification des paliers de guidage de l'organe d'actionnement créé une résistance au déplacement qui augmente à basse température. Pour un actionneur hydraulique, la viscosité du fluide hydraulique utilisé pour déplacer l'organe d'actionnement augmente également sensiblement. La charge de la pompe hydraulique utilisée pour pomper le fluide hydraulique augmente alors sensiblement. De plus, les efforts nécessaires pour modifier l'orientation des roues arrière augmentent sensiblement à basse vitesse où lorsque le véhicule est en marche arrière.

Afin de détecter des dysfonctionnements, un dispositif d'orientation de roue connu détermine lorsque l'effort à exercer sur l'organe d'actionnement est trop important et bloque les roues dans leur orientation. De plus, ce dispositif commande l'affichage d'un voyant dans l'habitacle qui recommande à l'utilisateur de stopper le véhicule et de se rendre au garage le plus proche. Ainsi, une baisse de température peut conduire à l'allumage d'un tel voyant dans l'habitacle.

Par conséquent, un utilisateur peut se retrouver dans des conditions de température et de roulement où les roues arrière sont bloquées dans une position d'orientation non neutre pour le reste de la mission en cours (c'est à dire jusqu'à la coupure du contact), ce qui peut perturber les conditions de conduite. Par position d'orientation neutre, on entend une position dans laquelle les orientations des roues arrière sont symétriques par rapport à l'axe médian de l'essieu du véhicule. L'utilisateur est également inutilement alarmé par un voyant alors que le véhicule n'a en fait pas réellement subi de panne.

Le document JP63151578 décrit un dispositif du type défini dans le préambule de la revendication 1. Il propose d'augmenter le couple appliqué par l'actionneur afin de contrer la résistance du mécanisme à basse température. Cependant, cette augmentation de couple engendre des contraintes mécaniques importantes sur le dispositif imposant de sur-dimensionner les éléments composant ce dispositif.

L'invention vise à résoudre un ou plusieurs de ces inconvénients. L'invention porte ainsi sur un dispositif d'orientation de roues arrière de véhicule, comprenant:
- un essieu arrière muni de deux roues orientables ;
- un actionneur comprenant :
   - un corps présentant un palier de guidage graissé ;
   - un organe d'àctionnement mobile par rapport au corps, guidé par le palier, et dont les déplacements orientent les roues autour de la verticale de l'essieu arrière;
- un capteur de température ;
- un circuit de commande de l'actionneur, apte à commander le blocage des déplacements de l'organe d'actionnement lorsque la température déterminée par le capteur de température est inférieure à un seuil prédéterminé.

Selon une variante, le circuit de commande est apte à commander le blocage de l'organe d'actionnement dans une orientation des roues neutre lorsque la température déterminée par le capteur de température est inférieure audit seuil prédéterminé.

Selon une autre variante, le circuit de commande :
- présente une interface de réception de la mise de contact du véhicule et de réception de conditions de roulage du véhicule ;
- comprend une mémoire mémorisant si la température est inférieure au seuil prédéterminé lorsque l'interface reçoit une information de mise de contact ;
- commande le blocage des déplacements de l'organe d'actionnement lorsqu'une température inférieure au seuil a été mémorisée et que des conditions de roulage prédéfinies sont remplies.

Selon encore une variante, les conditions de roulage prédéfinies sont une vitesse du véhicule inférieure à un seuil ou l'enclenchement de la marche arrière.

Selon encore une autre variante, le circuit de commande met à jour le contenu de la mémoire à intervalles prédéfinis après la réception d'une information de mise de contact.

L'invention porte également sur un véhicule comprenant un dispositif d'orientation tel que décrit ci-dessus et un calculateur de gestion moteur incluant le capteur de température dudit dispositif d'orientation.

L'invention porte encore sur un véhicule comprenant un dispositif d'orientation tel que décrit ci-dessus, un capteur de température extérieure et un afficheur disposé dans l'habitacle affichant la température déterminée par le capteur de température extérieure, le capteur de température du dispositif d'orientation étant ledit capteur de température extérieure.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement des éléments d'un dispositif d'orientation selon l'invention ;
- la figure 2 représente schématiquement un dispositif d'orientation des roues arrière en vue de dessus.

L'invention propose de pouvoir bloquer les roues arrière dans une orientation par rapport à la verticale de l'essieu ou du véhicule lors du franchissement d'un seuil par un paramètre représentatif de la résistance au déplacement exercée par la graisse d'un palier de guidage d'un organe d'actionnement. C'est typiquement le cas lorsque la température déterminée par un capteur est inférieure à un seuil prédéterminé. Le seuil de température peut par exemple être fixé à -20°, -25° ou -30°C.

Ainsi, le dispositif d'orientation des roues arrière permet de ne pas modifier l'orientation des roues lorsque l'effort à exercer pour déplacer l'organe d'actionnement de l'orientation des roues serait trop élevé. On évite également le déclenchement d'un voyant lumineux d'alerte dans l'habitacle induit par effort excessif exercé sur l'organe d'actionnement pendant son déplacement. La solution selon l'invention permet en outre de ne pas avoir à surdimensionner l'actionneur ou à modifier la graisse de palier utilisée. Un important surcoût du dispositif d'orientation des roues arrière est ainsi évité. En outre, l'invention est avantageusement appliquée à un actionneur hydraulique, dans lequel l'augmentation de la viscosité du fluide hydraulique à basse température génère également une augmentation de charge d'une pompe hydraulique.

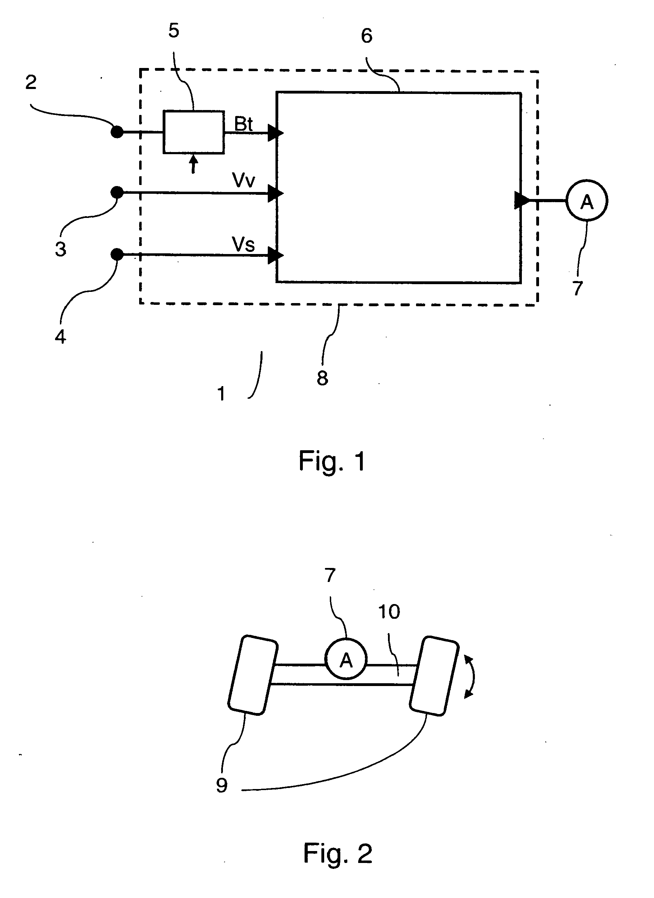

La figure 1 représente une partie d'un dispositif 1 d'orientation des roues arrière d'un véhicule. Le dispositif d'orientation 1 comprend un circuit de commande 8 d'un actionneur hydraulique 7. L'actionneur 7 comprend un corps (non illustré) muni d'un palier de guidage graissé. L'actionneur 7 comprend également un organe d'actionnement (non illustré) mobile par rapport au corps et guidé par le palier. Le dispositif d'orientation 1 comprend également un capteur de température 2. Le capteur de température 2 est connecté à un circuit 5 de comparaison de température. A réception d'un signal d'initialisation, le circuit 5 échantillonne la température fournie par le capteur 2, et la compare à un seuil de température prédéfini. Lorsque la température échantillonnée est inférieure au seuil de température, un signal Bt indiquant une basse température est généré et appliqué sur une interface de réception d'un circuit de pilotage 6. Le signal d'initialisation peut typiquement correspondre à un signal de mise de contact ou de démarrage du véhicule. Le circuit de commande 8 peut alors avantageusement mémoriser le signal Bt indicateur de basse température après avoir reçu un tel signal d'initialisation.

On peut envisager un capteur de température 2 déterminant directement la température du fluide hydraulique de l'actionneur 7 ou la température à proximité de l'actionneur.

Les déplacements de l'organe d'actionnement de l'actionneur 7 orientent les roues 9 autour de la verticale de l'essieu arrière 10 de façon connue en soi, comme illustré à la figure 2. Dans des conditions usuelles de fonctionnement, le circuit de pilotage 6 génère des commandes d'orientation des roues arrière destinées à influer sur la direction du véhicule en fonction des conditions de roulage. Le circuit de pilotage 6 est apte à générer une commande de l'organe d'actionnement telle que les roues arrière sont maintenues dans une orientation lorsqu'un signal Bt indiquant une basse température est reçu. Avantageusement, le circuit de commande bloque l'organe d'actionnement dans une orientation des roues neutres.

Dans un mode de fonctionnement simplifié, on peut prévoir que l'organe d'actionnement maintienne les roues dans une position dès qu'un signal Bt indiquant une basse température est généré. Le maintien des roues dans une position peut notamment s'effectuer en interrompant l'alimentation électrique de l'actionneur 7.

Avantageusement, le dispositif de commande 8 conditionne le maintien des roues arrière dans leur orientation lorsque des conditions de roulage prédéfinies sont remplies. Pour déterminer de telles conditions de roulage, le circuit de pilotage 6 présente une interface de réception destinée à recevoir les signaux Vv et Vs en provenance respectivement d'un capteur de vitesse du véhicule et d'un capteur d'enclenchement de marche arrière. C'est en effet typiquement à faible vitesse et en marche arrière que les efforts d'orientation des roues arrière devant être générés par l'actionneur 7 sont les plus importants.

Dans le cas où le signal Bt indicateur de basse température a été mémorisé, une variation de l'orientation des roues peut être autorisée si la vitesse est supérieure à un seuil et si la marche arrière n'est pas enclenchée, puis l'orientation peut à nouveau être bloquée ou ramenée vers une orientation neutre lors d'un retour à basse vitesse ou lors de l'enclenchement de la marche arrière. On peut notamment prévoir un seuil de vitesse de 5, 10 ou 15 km/h. On peut prévoir que le seuil de vitesse déclenchant une commande d'orientation en position neutre soit supérieur au seuil de déblocage de l'orientation des roues. Ainsi, on dispose d'une garantie de pouvoir ramener les roues en position neutre, l'opération étant effectuée à une vitesse où l'effort à exercer est moindre.

Afin de ne pas bloquer inutilement les roues dans une orientation, on peut également prévoir qu'un signal d'initialisation soit appliqué à intervalles prédéfinis durant le fonctionnement du véhicule, afin de mettre à jour l'état du signal Bt.

Lorsque le dispositif d'orientation 1 est intégré dans un véhicule, le capteur de température 2 est avantageusement un capteur de température d'un calculateur de gestion moteur, destiné à déterminer la température extérieure au véhicule.

On peut également prévoir que le capteur de température 2 soit un capteur de température extérieure connecté à un afficheur disposé dans l'habitacle pour afficher la température mesurée.

Le dispositif d'orientation peut ainsi utiliser un minimum de composants qui lui sont propres pour en réduire le coût de production.

## Revendications

1. Dispositif d'orientation (1) de roues arrière de véhicule, comprenant :
- un essieu arrière muni de deux roues orientables ;
- un actionneur (7) comprenant :
- un corps présentant un palier de guidage graissé ;
- un organe d'actionnement mobile par rapport au corps, guidé par le palier, et dont les déplacements orientent les roues autour de la verticale de l'essieu arrière;
- un capteur de température (2) ;
le dispositif étant **caractérisé en ce qu'**il comprend :
-un circuit de commande (8) de l'actionneur, apte à commander le blocage des déplacements de l'organe d'actionnement lorsque la température déterminée par le capteur de température est inférieure à un seuil prédéterminé.

2. Dispositif de direction selon la revendication 1, dans lequel le circuit de commande (8) est apte à commander le blocage de l'organe d'actionnement dans une orientation des roues (9) neutre lorsque la température déterminée par le capteur de température (2) est inférieure audit seuil prédéterminé.

3. Dispositif de direction selon la revendication 1 ou 2, dans lequel le circuit de commande :
- présente une interface de réception de la mise de contact du véhicule et de réception de conditions de roulage du véhicule ;
- comprend une mémoire mémorisant si la température est inférieure au seuil prédéterminé lorsque l'interface reçoit une information de mise de contact ;
- commande le blocage des déplacements de l'organe d'actionnement lorsqu'une température inférieure au seuil a été mémorisée et que des conditions de roulage prédéfinies sont remplies.

4. Dispositif de direction selon la revendication 3, dans lequel les conditions de roulage prédéfinies sont une vitesse du véhicule inférieure à un seuil ou l'enclenchement de la marche arrière.

5. Dispositif de direction selon la revendication 3 ou 4, dans lequel le circuit de commande (8) met à jour le contenu de la mémoire à intervalles prédéfinis après la réception d'une information de mise de contact.

6. Véhicule comprenant un dispositif d'orientation selon l'une quelconque des revendications précédentes et un calculateur de gestion moteur incluant le capteur de température (2) dudit dispositif d'orientation (1).

7. Véhicule comprenant un dispositif d'orientation selon l'une quelconque des revendications 1 à 5, un capteur de température extérieure (2) et un afficheur disposé dans l'habitacle affichant la température déterminée par le capteur de température extérieure, le capteur de température du dispositif d'orientation étant ledit capteur de température extérieure.

## Claims

1. Orientation device (1) for orienting the rear wheels of a vehicle, comprising:
- a rear axle equipped with two orientable wheels;
- an actuator (7) comprising:
- a body with a lubricated guide bearing;
- an actuating member capable of moving relative to the body, guided by the bearing, and the movements of which orient the wheels about the vertical of the rear axle;
- a temperature sensor (2);
the device being **characterized in that** it comprises:
- an actuator operating circuit (8) able to command that the actuating member be locked unable to move when the temperature determined by the temperature sensor is below a predetermined threshold.

2. Steering device according to Claim 1, in which the operating circuit (8) is able to command that the actuating member be locked in a neutral orientation of the wheels (9) when the temperature determined by the temperature sensor (2) is below said predetermined threshold.

3. Steering device according to Claim 1 or 2, in which the operating circuit:
- has an interface that logs the fact that the vehicle ignition has been switched on and logs the vehicle driving conditions;
- has a memory that stores whether the temperature is below the predetermined threshold when the interface receives information that the ignition has been switched on;
- commands that the actuating member be locked unable to move when a temperature below the threshold has been stored in memory and that predefined driving conditions are met.

4. Steering device according to Claim 3, in which the predefined driving conditions are a vehicle speed below a threshold or the selection of reverse gear.

5. Steering device according to Claim 3 or 4, in which the operating circuit (8) updates the content of the memory at predefined intervals after receiving information that the ignition has been switched on.

6. Vehicle comprising an orientation device according to any one of the preceding claims and an engine management computer including the temperature sensor (2) of said orientation device (1).

7. Vehicle comprising an orientation device according to any one of Claims 1 to 5, an external-temperature sensor (2) and a display positioned in the cabin displaying the temperature determined by the external-temperature sensor, the temperature sensor of the orientation device being said external-temperature sensor.

## Patentansprüche

1. Vorrichtung (1) zur Ausrichtung von Fahrzeug-Hinterrädern, die enthält:
- eine Hinterachse, die mit zwei ausrichtbaren Rädern ausgestattet ist;
- einen Aktor (7), der enthält:
- einen Körper, der ein gefettetes Führungslager aufweist;
- ein bezüglich des Körpers bewegliches, vom Lager geführtes Betätigungsorgan, dessen Verschiebungen die Räder um die Senkrechte der Hinterachse herum ausrichten;
- einen Temperaturfühler (2);
wobei die Vorrichtung **dadurch gekennzeichnet ist, dass** sie enthält:
- einen Steuerkreis (8) des Aktors, der das Blockieren der Verschiebungen des Betätigungsorgans steuern kann, wenn die vom Temperaturfühler bestimmte Temperatur unter einer vorbestimmten Schwelle liegt.

2. Lenkvorrichtung nach Anspruch 1, bei der der Steuerkreis (8) das Blockieren des Betätigungsorgans in einer neutralen Ausrichtung der Räder (9) steuern kann, wenn die vom Temperaturfühler (2) bestimmte Temperatur unter der vorbestimmten Schwelle liegt.

3. Lenkvorrichtung nach Anspruch 1 oder 2, bei der der Steuerkreis:
- eine Empfangsschnittstelle des Einschaltens der Zündung des Fahrzeugs und des Empfangs von Fahrbedingungen des Fahrzeugs aufweist;
- einen Speicher enthält, der speichert, ob die Temperatur unter der vorbestimmten Schwelle liegt, wenn die Schnittstelle eine Einschaltinformation empfängt;
- das Blockieren der Verschiebungen des Betätigungsorgans steuert, wenn eine unter der Schwelle liegende Temperatur gespeichert wurde, und wenn vordefinierte Fahrbedingungen erfüllt sind.

4. Lenkvorrichtung nach Anspruch 3, bei der die vordefinierten Fahrbedingungen eine Geschwindigkeit des Fahrzeugs unter einer Schwelle oder das Einlegen des Rückwärtsgangs sind.

5. Lenkvorrichtung nach Anspruch 3 oder 4, bei der der Steuerkreis (8) den Inhalt des Speichers in vordefinierten Zeitabständen nach dem Empfang einer Einschaltinformation aktualisiert.

6. Fahrzeug, das eine Ausrichtvorrichtung nach einem der vorhergehenden Ansprüche und einen Motorsteuerungsrechner enthält, der den Temperaturfühler (2) der Ausrichtvorrichtung (1) umfasst.

7. Fahrzeug, das eine Ausrichtvorrichtung nach einem der Ansprüche 1 bis 5, einen Außentemperaturfühler (2) und eine im Fahrzeuginnenraum angeordnete Anzeige enthält, die die vom Außentemperaturfühler bestimmte Temperatur anzeigt, wobei der Temperaturfühler der Ausrichtvorrichtung der Außentemperaturfühler ist.
